# EUROPEAN PATENT APPLICATION

(11) **EP 0 676 312 A2**
(43) Date of publication of application: **11.10.1995**
(21) Application number: 95201605.3
(22) Date of filing: 15.02.1993
(51) Int. Cl.: B60Q 3/04, G01D 11/24, F16B 21/02

(54) **Display apparatus**

(30) Priority: 04.03.1992 US 845974
(62) Divisional of application: 93200414.6
(71) Applicant: DELCO ELECTRONICS CORPORATION, Kokomo Indiana 46902 (US)
(72) Inventor: Scott, Stephen Daniel, Fenton, Michigan 48430 (US)
(74) Representative: Denton, Michael John

(57) **Abstract**

Display apparatus includes a gauge (15) with a first set of surfaces (20,28) and a light pipe (48) into which are integrally moulded a second set of surfaces (98,86,82), the first and second sets of surfaces cooperating with one another to secure the gauge (15) to the light pipe (48) by snap-fitting, the light pipe (48) performing a dual function of transmitting light and retaining the gauge (15).

## Description

This invention relates to display apparatus in which a gauge is mounted on a light pipe.

Many motor vehicles contain one or more gauge displays used for conveying information to the driver. In some of these gauge displays, the display is backlit, so that light supplied typically from behind the display travels through translucent graphics portions of the display enabling the graphics portions to emit light.

One known method of back-lighting displays uses light wave-guides, known as light pipes, which are typically constructed of transparent plastics material. If a vehicle instrument cluster includes air core gauges and requires extensive light piping adequately to back-light the display, the gauges are typically mounted to a case housing or a circuit board with a light pipe placed in front of the gauge. In such methods, several additional fasteners may be necessary to achieve the mounting of the air core gauges, with some systems requiring numerous additional fasteners for each individual gauge.

These above mentioned additional fasteners add cost to display systems because each additional fastener is another part that must be purchased.

The present invention seeks to provide improved display apparatus.

According to an aspect of the present invention, there is provided display apparatus as specified in claim 1.

These arrangements can, decrease the cost of the construction of displays and increase the speed of assembly of the display.

This invention can provide a method and apparatus for mounting gauges in displays that eliminates the need for additional fasteners formerly necessary for the mounting of displays. By eliminating additional fasteners, displays may be manufactured at a lower cost and assembled with greater ease.

A preferred embodiment comprises (i) a gauge means including a feature means for contacting a mount means and (ii) a light pipe into which is integrally moulded the mount means for contacting the feature means in a secure manner thereby holding the gauge means in place without requiring additional fasteners.
Advantageously, the apparatus of this embodiment may be assembled in a simplified manner by placing the feature means of the gauge means in contact with the mount means in the light pipe and engaging the feature means with the mount means whereby the gauge means is securely fastened into the display.

An embodiment of the present invention is described below, by way of example only, with reference to the accompanying drawings, in which:
Figure 1 is a side elevational view of an embodiment of apparatus for mounting an air core gauge to a light pipe;
Figure 2 is a plan view of the light pipe of Figure 1;
Figure 3 is a cross-sectional view of the light pipe of Figure 1, taken along line 3-3 of Figure 2;
Figure 4 is a cross-sectional view of the light pipe of Figure 1, taken along line 4-4 of Figure 2;
Figure 5 is a side elevational view of the apparatus of Figure 1 showing the air core gauge mounted on the light pipe;
Figure 6 is a side elevational view, in partial cross-section, of a light pipe of the second embodiment of the invention;
Figure 7 is a plan view of the light pipe of Figure 6; and
Figure 8 is a side elevational view of the air core gauge of Figure 1 mounted on the light pipe of Figure 6.

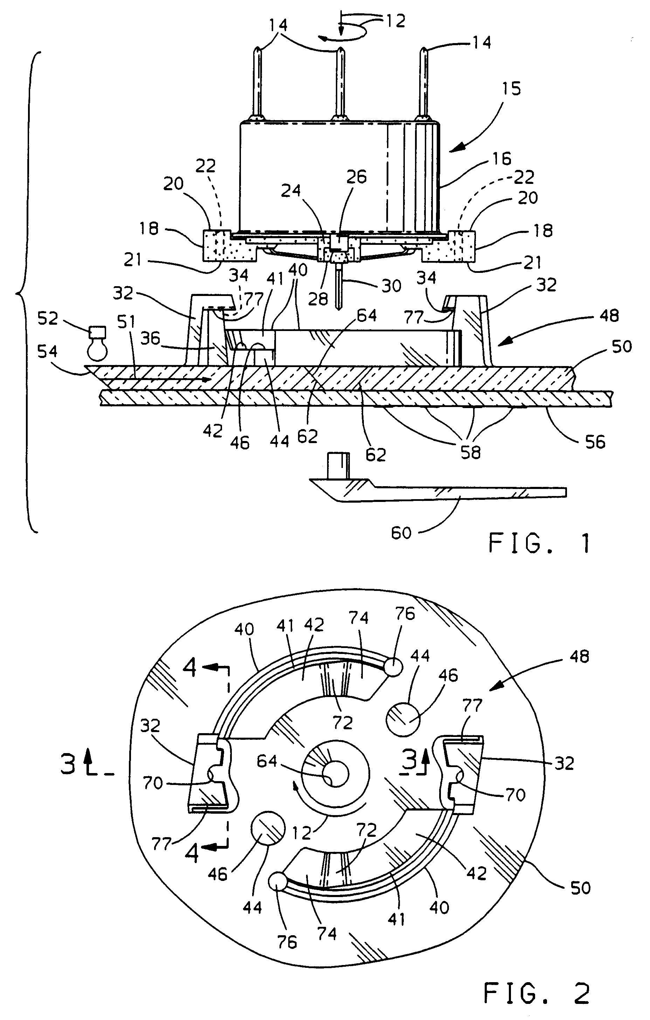

Referring to Figure 1, the gauge 15 shown is a typical air core gauge (or equivalent) constructed within an aluminium shell 16. Within the aluminium shell 16 is included a bobbin (not shown) around which coils are wound. The coils surround a magnetic rotor which rotates in response to magnetic flux caused by energization of the coils, thereby rotating spindle 30 to which a pointer 60 is fastened.

In the example shown, there are moulded to the bobbin two primary ears 18 and two secondary ears 24 (only one shown). The primary and secondary ears 18 and 24 hold the bobbin in place within shell 16 with the aid of metal tabs 26 crimped around secondary ears 24. The primary and secondary ears 18 and 24 provide surfaces 28 and 20 for contacting components of the light pipe 48 to hold securely the gauge 15 in place.

The light pipe 48 has a light transmitting member 50 and, integrally moulded therein, a mount 32,40. The mount 32,40 has surfaces 34 and 74 for contacting the surfaces 20 and 28 of the ears 18,24 to hold the gauge securely in place, without the need for additional fasteners.

More particularly, in the embodiment shown in Figures 1 to 5, the gauge 15 is secured to the light pipe 48 by placing the gauge in contact with the mount 32,40 and then twisting, as shown by arrows 12. When the gauge 15 is first placed in the mount, the surfaces 21 of primary ears 18 are placed on the surfaces 46 of stabilizing posts 44. The surfaces 28 of secondary ears 24 are placed on surfaces 42 of two diametrically opposed guides 40. The gauge 15 is then twisted relative to the light pipe 48 in the direction of arrow 12 (see Figure 2). When the gauge 15 is twisted, the surface 28 of secondary ears 24 rides along slide surfaces 42 of guides 40. The surfaces 41 of guides 40 retain the gauge 15 in position during the twist process.

As the gauge 15 is twisted, primary ears 18 rotate into diametrically opposed retainers 32. As primary ears 18 rotate into retainers 32, surfaces 28 of secondary ears 24 slide up ramps 72 in guides 40 and come to rest on friction surfaces 74 of guides 40. The friction surfaces 74 and underside surfaces 34 of the mount means apply opposing forces on surfaces 20 and 28 of the ears 18,24 to provide a friction fit of the gauge 15 on the light pipe 48. The friction fit between the mount and the ears 18,24 is aided by ramps 72 as follows. Slide surfaces 42 are at a greater perpendicular distance from underside surfaces 34 than the perpendicular distance between surfaces 28 and 20. The ramps 72 provide a gradual change between slide surfaces 42 and friction surfaces 74, friction surfaces 74 being at a slightly smaller perpendicular distance from underside surfaces 34 than the perpendicular distance between surfaces 28 and 20. When the feature means is engaged to the mount, the perpendicular proximity between friction surfaces 74 and underside surfaces 34 cause slight strain on the gauge bobbin through the primary and secondary ears 18 and 24, thereby to provide the friction fit holding the gauge 15 in place.

Posts 76 in guides 40 and surfaces 36 in retainers 32 act as stops for the primary and secondary ears 18 and 24 to prevent the gauge 15 from being twisted too far. Ribs 77 located on the underside surface 34 of each retainer 32 provide the friction fit with the surfaces 20 of the ears 18. Once the ears 18 are engaged in the retainers 32, ribs 77 prevent the gauge 15 from rotating back out of the mount from vibration or other such forces.

In the event that part of the mount does not function properly to hold the gauge in place, two slots 70 may be placed in the tops of retainers 32. The slots 70 are aligned with holes 22 in primary ears 18 when the ears are properly engaged with the mount. As a back-up attachment, two screws (not shown) may be driven through slots 70 and into holes 22 to hold the gauge in place. This, however, is not normally necessary.

Mounted on the front surface of the light transmitting member 50 of the light pipe 48 is a generally translucent sheet 56, parts of which may be masked and filtered with applique graphic symbols 58 forming part of a gauge display.

When the gauge 15 is mounted in the assembly, the spindle 30 is inserted through hole 64 in the light pipe 48 and through a hole (not shown) in the translucent sheet 56. A pointer 60 is attached to spindle 30 at the front of the display, so that pointer 60 moves along the graphic symbols 58 as the spindle 30 is rotated by the gauge 15.

In the backlit display shown, light is provided by a light source 52, such as one or more incandescent bulbs. Light rays 51 may be transmitted into the light transmitting member 50 and reflected off a surface 54 within light transmitting member 50 so as to travel along the member. Around hole 64, reflecting surfaces 62 reflect the light rays 51 towards the pointer 60. The pointer 60 receives the light and has internal surfaces which reflect the light so that the pointer appears lit to a viewer. Various other reflecting surfaces may be moulded into the light pipe 48 so that the light rays are reflected to other parts of the display which then appear lit. Such implementations are well known to those skilled in the art and will not be set forth in further detail herein.

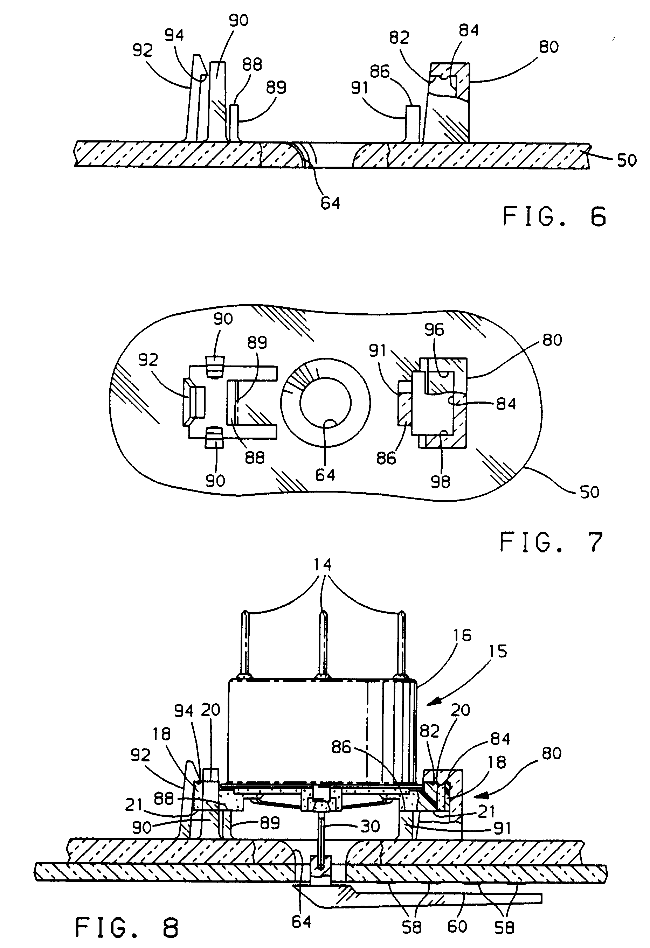

In the above described embodiment, the gauge 15 is placed in the mount, and twisted relative to the mount to engage the friction fit between the ears 18,24 and the mount which secures the gauge 15 to the light pipe 48, thereby mounting the gauge 15 in the display.
In a second embodiment shown in Figures 6 to 8, the gauge 15 is mounted to the display by engaging the ears 18,24 of the gauge with a mount which includes a retainer 80 into which part of the ears 18 is inserted. The ears 18 and mount are then engaged by snapping the other part of the ears 18 into a cantilevered snap finger 92.

More particularly, the retainer 80 has an inner top surface 82 and three inner side surfaces 84, 96 and 98, stops 89 and 91 having surfaces 88 and 86, guides 90 and a cantilevered snap finger 92. In assembly, one of the primary ears 18 is placed in retainer 80, which locates the ear 18 via inner surfaces 84, 96 and 98. The other primary ear 18 is then snapped in-between guides 90 by cantilevered snap finger 92 having retaining surface 94 which contacts surface 20 of the ear 18. The bottom surfaces 21 of the primary ears 18 rest on surfaces 88 and 86 of stops 89 and 91 to provide location of the gauge 15 in a first direction.

Stop 89 has a limited amount of give and provides a spring force to hold ear 18 tightly in place against retaining surface 94 of cantilevered snap finger 92. Surfaces 82 and 86 provide a force fit for the ear 18 in retainer 80. Surface 94 of cantilevered snap finger 92 and surface 82 of retainer 80 provide location of the gauge 15 in the opposite direction. Likewise, cantilevered snap finger 92, guides 90 and retainer 80 provide location of the gauge 15 in the remaining dimensions.

Retainer 80 may be provided with a protruding spherical dimple in surface 82 to act together with hole 22 in primary ear 18 to locate the primary ear 18 within retainer 80.

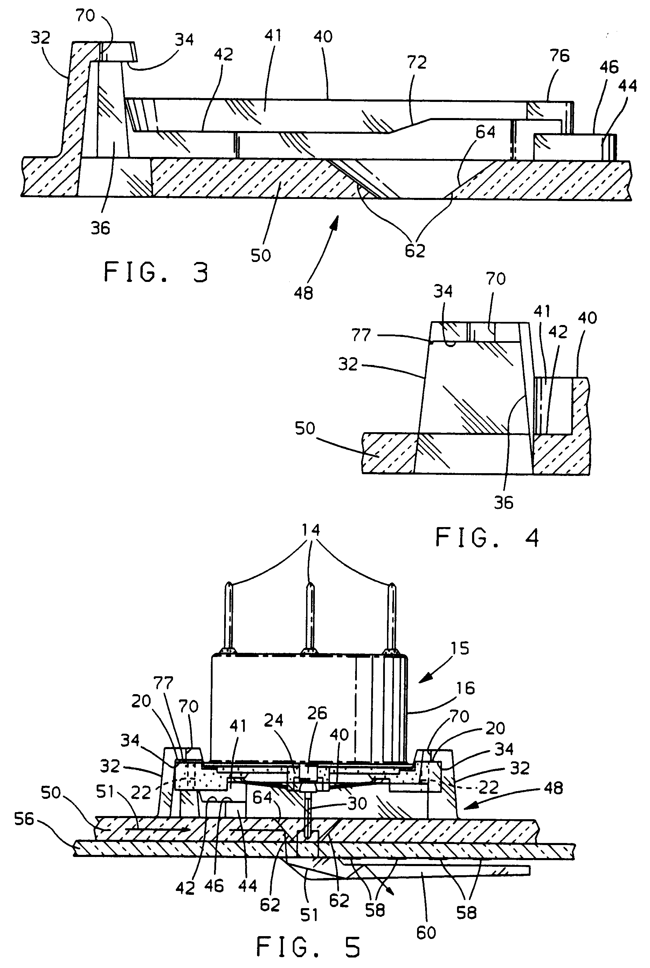

Either of the above embodiments may be used and the completed assembly may be mounted in a housing (not shown), which is typically moulded from a plastics material. The housing may be provided with a clear cover of plastics material to keep dust out of the display. The entire display may then be installed into a motor vehicle. Electrical connections are made with terminals 14 of gauge 15, through which power is supplied to the display, in a known manner. Methods of mounting assemblies like the type shown in Figures 4 and 7 into housings and then into motor vehicles are well known to those skilled in the art.

The disclosures in United States patent application no. 845,974, from which this application claims priority, and in the abstract accompanying this application are incorporated herein by reference.

## Claims

1. Display apparatus comprising a gauge (15) including securing means (18,24) which includes a first set of surfaces (20,28); and a light pipe (48) including integrally formed therewith a mount (80,92), the mount including a second set of surfaces (94,86,82), the first and second sets of surfaces cooperating in use to form a snap-fit between the gauge and the mount to secure the gauge relative to the light pipe.

2. Display apparatus according to claim 1, wherein the mount comprises a retainer (80) and a cantilevered snap finger (92) and the gauge comprises a pair of ears (18), one ear in use being received in the retainer and the other ear being held in the cantilevered snap finger by a snap-fit.
